# EUROPÄISCHE PATENTANMELDUNG

(11) **EP 4 563 046 A1**
(43) Veröffentlichungstag der Anmeldung: **04.06.2025**
(21) Anmeldenummer: 24216082.8
(22) Anmeldetag: 28.11.2024
(51) Int. Cl.: A47J 42/50

(54) **KAFFEE- ODER GEWÜRZMÜHLE**

(30) Priorität: 28.11.2023 LU 505640
(71) Anmelder: Biernatek, Eduard, 63110 Rodgau (DE)
(72) Erfinder: Biernatek, Eduard, 63110 Rodgau (DE)
(74) Vertreter: Hoffmann, Jürgen

(57) **Zusammenfassung**

Die Erfindung betrifft eine Kaffee- oder Gewürzmühle mit einem Gehäuse, das eine Öffnung aufweist, und mit einer im Bereich der Öffnung angeordneten Verschlussvorrichtung, mittels der ein in dem Gehäuse angeordnetes Aufnahmereservoir für das zu mahlende Mahlgut verschließbar ist. Die Kaffee- oder Gewürzmühle zeichnet sich dadurch aus, dass die Verschlussvorrichtung zwei Verschlussbauteile aufweist, von denen wenigstens eines relativ zu dem Gehäuse beweglich gelagert ist und die relativ zueinander wahlweise in eine Öffnungsstellung, in der Mahlgut in das Aufnahmereservoir einfüllbar ist, oder eine Verschlossenstellung, in der kein Mahlgut in das Aufnahmereservoir einfüllbar ist, überführbar sind.

## Beschreibung

Die Erfindung betrifft eine Kaffee- oder Gewürzmühle mit einem Gehäuse, das eine Öffnung aufweist, und mit einer im Bereich der Öffnung angeordneten Verschlussvorrichtung, mittels der ein in dem Gehäuse angeordnetes Aufnahmereservoir für das zu mahlende Mahlgut verschließbar ist.

Aus der Patentanmeldung US 2018 0279829 A1 ist eine Kaffeemühle bekannt, die eine Mahleinheit mit einem Mahlkegel und eine Antriebswelle, deren eines Ende mit dem Mahlkegel zusammenwirkend gekoppelt ist, aufweist. An dem anderen Ende ist ein rechteckiger Wellenabschnitt ausgebildet, an den ein Betätigungsgriff, der eine rechteckige Ausnehmung für das Ende der Welle aufweist, angebracht ist. Die Kaffeemühle beinhaltet einen scheibenförmigen Deckel, der abnehmbar an der oberen Endöffnung eines Behälterhauptkörpers angebracht ist. Die Kaffeemühle beinhaltet außerdem einen zylindrischen Vorratsbehälter für das gemahlene Gut, der abnehmbar an einer unteren Endöffnung des Behälterhauptkörpers angebracht ist und der nach oben offen ist.

Es ist die Aufgabe der vorliegenden Erfindung, eine Kaffee- oder Gewürzmühle der eingangs genannten Art anzugeben, die ein einfaches Einfüllen des Mahlgutes ermöglicht und bei der das Mahlgut bis zu einem Mahlvorgang geschützt bevorratet werden kann.

Die Aufgabe wird durch eine Kaffee- oder Gewürzmühle gelöst, die dadurch gekennzeichnet ist, dass die Verschlussvorrichtung zwei Verschlussbauteile aufweist, von denen wenigstens eines relativ zu dem Gehäuse beweglich gelagert ist und die relativ zueinander wahlweise in eine Öffnungsstellung, in der Mahlgut in das Aufnahmereservoir einfüllbar ist, oder eine Verschlossenstellung, in der kein Mahlgut in das Aufnahmereservoir einfüllbar ist, überführbar sind.

Die Erfindung hat den ganz besonderen Vorteil, dass das Gehäuse in einfacher Weise für einen Einfüllvorgang geöffnet und anschließend einfach wieder vorschlossen werden kann, ohne dass hierfür Bauteile vorübergehend von der Kaffee- oder Gewürzmühle entfernt werden müssen. Auf diese Weise ist vorteilhafter Weise gewährleistet, dass keine Bauteile versehentlich verloren gehen können. Insbesondere kann die Kaffee- oder Gewürzmühle dennoch vorteilhaft derart ausgebildet sein, dass sie, insbesondere werkzeugfrei, für einen Reinigungsvorgang vollständig oder wenigstens teilweise zerlegt werden kann.

Außerdem hat die Erfindung den Vorteil, dass ein Einfüllen von Mahlgut ermöglicht ist, ohne einen Deckel demontieren zu müssen, wofür bei der aus der oben erwähnten Patentanmeldung US 2018 0279829 A1 bekannten Kaffeemühle zusätzlich auch die Handkurbel vorübergehend demontiert werden muss.

Bei einer vorteilhaften Ausführung weist wenigstens eines der Verschlussbauteile wenigstens eine Durchgangsöffnung auf, die in der Verschlossenstellung von dem anderen der Verschlussbauteile abgedeckt ist und die in der Öffnungsstellung von dem anderen der Verschlussbauteile nicht abgedeckt ist. Wenn die Verschlussbauteile geringfügig (vorzugsweise weniger als 2 mm, insbesondere weniger als 1 mm) voneinander beabstandet sind, wird dennoch ein für die Aufbewahrung von Kaffeebohnen oder Gewürzen, wie beispielsweise Pfefferkörner oder Salzkörner, ausreichender Verschluss erreicht. Allerdings ist es auch möglich, dass die Verschlussbauteile, zumindest in der Verschlossenstellung, unmittelbar aneinander anliegen, so dass ein sehr dichter Verschluss in der Verschlossenstellung erzielt werden kann.

Beispielsweise kann vorteilhaft vorgesehen sein, dass beide Verschlussbauteile jeweils wenigstens eine Durchgangsöffnung aufweisen, wobei die wenigstens eine Durchgangsöffnung des einen Verschlussbauteiles in der Öffnungsstellung mit der wenigstens einen Durchgangsöffnung des anderen Verschlussbauteiles fluchtet.

Alternativ oder zusätzlich kann auch vorgesehen sein, dass wenigstens eines der Verschlussbauteile mehrere Durchgangsöffnungen, insbesondere genau zwei oder genau drei Durchgangsöffnungen, aufweist, die in der Verschlossenstellung von dem anderen der Verschlussbauteile abgedeckt sind und die in der Öffnungsstellung von dem anderen der Verschlussbauteile nicht abgedeckt sind. Insbesondere können beispielsweise beide Verschlussbauteile jeweils mehrere Durchgangsöffnungen, insbesondere jeweils genau zwei oder genau drei Durchgangsöffnungen, aufweisen, wobei die Durchgangsöffnungen des einen Verschlussbauteiles in der Öffnungsstellung mit den Durchgangsöffnungen des anderen Verschlussbauteiles fluchten. Vorzugsweise weisen bei einer solchen Ausführung beide Verschlussbauteile dieselbe Anzahl von Durchgangsöffnungen auf.

Es ist alternativ jedoch auch möglich, dass eines der Verschlussbauteile keine Durchgangsöffnungen aufweist, sondern so ausgebildet und angeordnet ist, dass es nicht die gesamte Fläche der Öffnung ausfüllt, so dass zwischen dem Verschlussbauteil und dem Gehäuse wenigstens ein Durchgang verbleibt, der von dem anderen Verschlussbauteil in der Verschlossenstellung abgedeckt wird und in der Öffnungsstellung nicht abgedeckt wird.

Die wenigstens eine Durchgangsöffnung kann in einem kreisscheibenförmigen oder trichterartigen Abschnitt des Verschlussbauteils ausgebildet sein. Alternativ oder zusätzlich können beide Verschlussbauteile jeweils einen kreisscheibenförmigen oder trichterartigen Abschnitt aufweisen, wobei in jeder der kreisscheibenförmigen oder trichterartigen Abschnitte jeweils wenigstens eine Durchgangsöffnung ausgebildet ist. Der trichterartige Abschnitt kann beispielsweise als Ringtrichter ausgebildet sein, der eine ringförmige Rille aufweist, wobei am Boden der Rille wenigstens eine Durchgangsöffnung ausgebildet sein kann. Bei einer Ausführung, bei der beide Verschlussbauteile jeweils einen kreisscheibenförmigen oder trichterartigen Abschnitt aufweisen, sind die kreisscheibenförmigen oder trichterartigen Abschnitte vorzugsweise gleich ausgebildet und (vorzugsweise unmittelbar aneinander anliegend oder in geringem Abstand von weniger als 2 mm, insbesondere weniger als 1 mm) parallel zueinander angeordnet.

Bei einer vorteilhaften Ausführung ist die wenigstens eine Durchgangsöffnung beabstandet zu der Mittelachse des kreisscheibenförmigen oder trichterartigen Abschnitts angeordnet. Bei einer solchen Ausführung kann das Verschlussbauteil beispielsweise im Bereich der Mittelachse einen Durchbruch für eine Antriebswelle oder eine Aufnahme für ein Lager, insbesondere ein Wälzlager, zum rotierbaren Lagern einer Antriebswelle aufweisen.

Ganz allgemein kann vorteilhaft vorgesehen sein, dass eines der Verschlussbauteile relativ zu dem anderen Verschlussbauteil beweglich gelagert ist. Insbesondere kann eines der Verschlussbauteile relativ zu dem anderen Verschlussbauteil rotierbar gelagert sein.

Bei einer ganz besonders vorteilhaften Ausführung ist die rotierbare Lagerung mittels einer Gewindeverbindung realisiert. Eine solche Ausführung hat den ganz besonderen Vorteil, dass das auf diese Weise rotierbar gelagerte Verschlussbauteil zwar rotierbar ist, jedoch nicht versehentlich beim Umschalten zwischen der Verschlossenstellung und der Öffnungsstellung oder zwischen der Öffnungsstellung und der Verschlossenstellung (wofür nur ein Bruchteil einer vollen Umdrehung erforderlich ist) gelöst werden kann, wenn das Verschlussbauteil durch Ausführen mehrerer Umdrehungen eingeschraubt ist.

Der axiale Hub, den das Verschlussbauteil bei einer solchen Ausführung, bei der die rotierbare Lagerung mittels einer Gewindeverbindung realisiert ist, beim Umschalten zwischen der Verschlossenstellung und der Öffnungsstellung oder zwischen der Öffnungsstellung und der Verschlossenstellung ausführt, ist für die Funktion der Verschlussvorrichtung nicht von Relevanz, da für den Umschaltvorgang nur ein Bruchteil einer vollen Umdrehung erforderlich ist, so dass der Hub gering ist. Insbesondere können das Gewinde und das Gegengewinde (beispielsweise als Feingewinde) eine geringe Steigung aufweisen, so dass der axiale Hub besonders gering ist.

Insbesondere kann vorteilhaft vorgesehen sein, dass das rotierbar gelagerte Verschlussbauteil ein Gewinde aufweist, das in ein relativ zu dem anderen Verschlussbauteil und/oder dem Gehäuse ortfestes Gegengewinde eingeschraubt ist. Bei einer Ausführung, die besonders robust ausgebildet werden kann und mit wenigen Bauteilen auskommt, weist das rotierbar gelagerte Verschlussbauteil ein Gewinde, insbesondere ein Außengewinde, auf, das in ein an dem Gehäuse ausgebildetes Gegengewinde, das insbesondere als ein Innengewinde ausgebildet sein kann, eingeschraubt ist. Das an dem Gehäuse ausgebildete Gegengewinde kann beispielsweise an einem Ende der, insbesondere rohrförmigen, Wandung des Gehäuses ausgebildet sein. Es ist auch möglich, dass das Gewinde als Innengewinde ausgebildet ist, während das Gegengewinde als Außengewinde ausgebildet ist.

Ganz allgemein kann vorteilhaft vorgesehen sein, dass eines der Verschlussbauteile relativ zu dem anderen Verschlussbauteil mittels der_Gewindeverbindung derart rotierbar gelagert ist, dass ein Überführen der Verschlussbauteile in die Öffnungsstellung bzw. in die Verschlossenstellung mit zwei Händen erfolgen kann, ohne weitere Bauteile der Kaffee- oder Gewürzmühle zusätzlich halten oder abstützen zu müssen. Insbesondere kann vorteilhaft vorgesehen sein, dass eines der Verschlussbauteile relativ zu dem anderen Verschlussbauteil mittels der Gewindeverbindung derart rotierbar gelagert ist, dass der Benutzer ein erstes der Verschlussbauteile direkt oder indirekt mit einer Hand festhalten kann, während er das andere der Verschlussbauteile direkt oder indirekt mit der anderen Hand relativ zu dem ersten der Verschlussbauteile rotieren kann, ohne dass der Benutzer weitere Bauteile der Kaffee- oder Gewürzmühle zusätzlich halten oder abstützen muss, um die Verschlussbauteile relativ zueinander in die Öffnungsstellung bzw. in die Verschlossenstellung zu überführen.

Bei einer ganz besonders vorteilhaften Ausführung ist ein Spannelement vorhanden, welches das Gewinde direkt oder indirekt relativ zu dem Gegengewinde radial und/oder axial verspannt. Auf diese Weise wird ein Klappern vermieden. Außerdem wird ein unbeabsichtigtes Umschalten von der Verschlossenstellung in die Öffnungsstellung oder von der Öffnungsstellung in die Verschlossenstellung vermieden, da das Spannelement eine Reibung zwischen dem Gewinde und dem Gegengewinde bewirkt, die für einen Umschaltvorgang überwunden werden muss. Das Spannelement kann beispielsweise als Feder oder als Elastomerbauteil, insbesondere als Gummiring, beispielsweise O-Ring, ausgebildet sein. Insbesondere kann in dem Gewinde und/oder in dem Gegengewinde eine Nut ausgebildet sein, in der das als O-Ring ausgebildete Spannelement angeordnet ist.

Bei einer ganz besonders vorteilhaften Ausführung, die mit wenigen Bauteilen auskommt, fungiert wenigstens eines der Verschlussbauteile (zusätzlich zu seiner Funktion als Bestandteil der Verschlussvorrichtung) als Lagerbock zur Rotationslagerung einer relativ zu dem Gehäuse rotierbaren Antriebswelle des Mahlwerks. Insbesondere kann wenigstens eines der Verschlussbauteile ein Wälzlager, insbesondere ein Kugellager oder ein Nadellager, oder ein Gleitlager aufweisen. Zusätzlich kann (separat von der Verschlussvorrichtung) wenigstens ein weiterer Lagerbock, insbesondere mit einem Wälzlager oder einem Gleitlager, vorhanden sein, mittels dem die Antriebswelle rotierbar gelagert ist. Vorzugsweise ist die Antriebswelle zweifach gelagert.

Bei einer besonders kompakten und ergonomisch ausbildbaren Ausführung verläuft eine Antriebswelle durch wenigstens eines der Verschlussbauteile hindurch. Insbesondere kann vorteilhaft vorgesehen sein, dass die Antriebswelle durch beide Verschlussbauteile hindurch verläuft. Die Antriebswelle kann endseitig drehfest mit einem Mahlkegel eines Mahlwerks verbunden sein, der in einem Mahlring des Mahlwerks angeordnet ist. Das andere Ende kann mit einer Handhabe, beispielsweise einer Kurbel, drehfest verbunden sein.

Die Antriebswelle kann insbesondere koaxial zur Mittelachse des kreisscheibenförmigen oder trichterartigen Abschnitts angeordnet sein.

Ganz allgemein kann sich die Antriebswelle vorteilhaft entlang der Mittellängsachse des Gehäuses erstrecken.

Bei einer ganz besonders vorteilhaften Ausführung weist eines der Verschlussbauteile einen trichterförmigen Abschnitt auf, um als Trichter zum Einfüllen von Mahlgut zu fungieren. Der trichterförmige Abschnitt kann vorteilhaft radial nach außen über das Gehäuse hinausragen, was den Einfüllvorgang erleichtert. Der trichterförmige Abschnitt kann gemeinsam einstückig (beispielsweise als Spritzgussteil) mit dem kreisscheibenförmigen oder trichterartigen Abschnitt ausgebildet sein, der zumindest eine Durchgangöffnung aufweist.

Bei einer besonderen Ausführung ist eines der Verschlussbauteile relativ zu dem Gehäuse unbeweglich angeordnet. Bei dieser Ausführung kann das andere der Verschlussbauteile relativ zu dem Gehäuse beweglich, insbesondere rotierbar, gelagert sein.

Das relativ zu dem Gehäuse unbeweglich angeordnete Verschlussbauteil kann, insbesondere unmittelbar, an dem Gehäuse befestigt sein. Insbesondere kann vorteilhaft vorgesehen sein, dass das relativ zu dem Gehäuse unbeweglich angeordnete Verschlussbauteil, insbesondere unmittelbar, reibschlüssig, insbesondere ausschließlich reibschlüssig, an dem Gehäuse, insbesondere an der Innenseite einer Gehäusewandung, befestigt ist. Beispielsweise kann das relativ zu dem Gehäuse unbeweglich angeordnete Verschlussbauteil an seinem äußeren Umfangsrand ein elastisches Element, insbesondere ein Elastomerbauteil, beispielsweise einen Elastomerring, der ein Gummiring und/oder einen O-Ring sein kann, aufweisen, das an der Innenseite des Gehäuses anliegt. Alternativ oder zusätzlich kann das relativ zu dem Gehäuse unbeweglich angeordnete Verschlussbauteil einen kreisscheibenförmigen oder trichterartigen Abschnitt mit einer am äußeren Umfangsrand ausgebildeten Nut aufweisen, in die ein Elastomerring, insbesondere ein Gummiring, beispielsweise ein O-Ring, eingefügt ist.

Ganz allgemein kann vorteilhaft vorgesehen sein, dass das relativ zu dem Gehäuse unbeweglich angeordnete Verschlussbauteil formschlüssig an dem Gehäuse befestigt ist. Es ist - alternativ oder zusätzlich - auch möglich, dass das relativ zu dem Gehäuse unbeweglich angeordnete Verschlussbauteil, insbesondere unmittelbar, stoffschlüssig an dem Gehäuse befestigt ist. Eine solche Ausführung ist besonders robust. Eine solche Ausführung hat jedoch den Nachteil, dass sie für einen Reinigungsvorgang nicht vollständig zerlegt werden kann. Vorzugsweise ist das relativ zu dem Gehäuse unbeweglich angeordnete Verschlussbauteil, insbesondere unmittelbar, ohne stoffschlüssige Verbindung an der Innenseite des Gehäuses befestigt.

Bei einer ganz besonders vorteilhaften Ausführung ist das relativ zu dem Gehäuse unbeweglich angeordnete Verschlussbauteil stabförmig ausgebildet. Besonders präzise ist eine Ausführung, bei der die Enden des unbeweglich angeordneten Verschlussbauteils zu den Abschnitten des Gehäuses, an denen sie anliegen, komplementär gegengeformt sind. Beispielsweise kann das Verschlussbauteil einen Stab aufweisen, der bezüglich seiner Längserstreckungsrichtung senkrecht zur Längserstreckungsrichtung des, insbesondere rohrförmigen, Gehäuses angeordnet und im Inneren des Gehäuses eingeklemmt ist. Hierbei kann vorteilhaft vorgesehen sein, dass jedes der Enden des stabförmigen Verschlussbauteils einen Anlageabschnitt aufweist, der zu dem Abschnitt des Gehäuses, an dem er anliegt, komplementär gegengeformt ist. Allerdings sind auch andere Ausführungen möglich, bei denen ein Verschlussbauteil als Stab ausgebildet ist.

Bei einer besonderen Ausführung weist das relativ zu dem Gehäuse unbeweglich angeordnete Verschlussbauteil, das vorzugsweise stabförmig ausgebildet ist, einen kreissegmentförmigen Querschnitt auf. Ein solches Verschlussbauteil kann vorteilhaft in ein rohrförmiges Gehäuse, insbesondere formschlüssig und/oder reibschlüssig, eingefügt sein. Insbesondere kann ein solches Verschlussbauteil eine zu dem anderen Verschlussbauteil ausgerichtete Abflachung aufweisen.

Bei einer ganz besonders vorteilhaften Ausführung ist eines der Verschlussbauteile relativ zu einer mit dem Mahlwerk wirkverkoppelten Antriebswelle unbeweglich angeordnet. Hierbei kann das andere der Verschlussbauteile relativ zu dem Gehäuse beweglich, insbesondere rotierbar, gelagert sein. Insbesondere kann vorteilhaft vorgesehen sein, dass das relativ zu der Antriebswelle unbeweglich angeordnete Verschlussbauteil, insbesondere unmittelbar, an der Antriebswelle befestigt ist. Vorzugsweise ist das relativ zu der Antriebswelle unbeweglich angeordnete Verschlussbauteil zerstörungsfrei und/oder werkzeugfrei wieder lösbar an der Antriebswelle befestigt ist.

Das relativ zu der Antriebswelle unbeweglich angeordnete Verschlussbauteil kann vorteilhaft als Trichter ausgebildet sein und insoweit eine Mehrfachfunktion aufweisen.

Das relativ zu der Antriebswelle unbeweglich angeordnete Verschlussbauteil kann alternativ oder zusätzlich als Betätigungshandhabe ausgebildet sein, mittels der das Mahlwerk antreibbar ist und auch insoweit eine Mehrfachfunktion aufweisen.

Nach einem eigenständigen Erfindungsgedanken, der alleine oder in Kombination mit wenigstens einem der übrigen hier beschreiben Merkmale realisierbar ist, weist die Kaffee- oder Gewürzmühle eine Betätigungshandhabe zum Antreiben eines Mahlwerks auf, die als Trichter zum Einfüllen von Mahlgut ausgebildet ist.

Bei einer besonderen Ausführung, die mit wenigen Bauteilen auskommt, ist das relativ zu der Antriebswelle unbeweglich angeordnete Verschlussbauteil mittels eines Wälzlagers relativ zu dem Gehäuse rotierbar gelagert.

Die Kaffee- oder Gewürzmühle kann eine Betätigungshandhabe aufweisen. Insbesondere, wenn die Mühle als Kaffeemühle ausgebildet ist, kann die Betätigungshandhabe vorteilhaft als eine Handkurbel ausgebildet sein. Insbesondere, wenn die Mühle als Gewürzmühle ausgebildet ist, kann die Betätigungshandhabe vorteilhaft als Stabgriff, an den die Antriebswelle mittig angebracht ist, oder als Kugel ausgebildet sein.

Bei einer kompakt ausbildbaren Ausführung ist die Verschlussvorrichtung zwischen der Betätigungshandhabe und dem Aufnahmereservoir angeordnet.

Bei einer vorteilhaften und insbesondere besonders robusten und präzisen ausbildbaren Ausführung ist das Gehäuse rohrförmig ausgebildet, wobei die Öffnung durch eine der Rohröffnungen, insbesondere eine obere Rohröffnung, gebildet ist. Das Gehäuse weist vorzugsweise eine Ausgabeöffnung für das Kaffeepulver bzw. die gemahlenen Gewürze auf. Die Ausgabeöffnung kann durch eine untere Rohröffnung gebildet sein.

Das Gehäuse kann vorteilhaft in einer Querschnittsebene senkrecht zu seiner Längserstreckungsrichtung eine kreisförmige Außenkontur und/oder eine kreisförmige Innenkontur aufweisen. Eine solche Ausführung kann insbesondere als ergonomische Handmühle ausgebildet sein.

Das Gehäuse kann vorteilhaft einstückig aus einem einzigen Stück Rohmaterial, insbesondere aus einem Rohr, gefertigt sein. Eine solche Ausführung kann besonders robust und ergonomisch und darüber hinaus sehr präzise ausgebildet werden, insbesondere weil ein Rohr besonders genau, beispielsweise durch einen Drehvorgang, sehr präzise gefertigt werden kann.

Bei einer vorteilhaften Ausführung ist wenigstens eines der Verschlussbauteile werkzeugfrei in oder an das Gehäuse montierbar und/oder werkzeugfrei von dem Gehäuse lösbar. Eine solche Ausführung kann für einen Reinigungsvorgang einfach zumindest teilweise zerlegt werden.

Bei einer vorteilhaften Ausführung ist wenigstens eines der Verschlussbauteile werkzeugfrei drehfest an die Antriebswelle montierbar und/oder werkzeugfrei von der Antriebswelle lösbar. Eine solche Ausführung kann für einen Reinigungsvorgang einfach zumindest teilweise zerlegt werden.

Bei einer vorteilhaften Ausführung fungiert eines der Verschlussbauteile als Einstellknopf, insbesondere als Einstellmutter, zum Einstellen des Mahlgrades. Hierzu kann das Verschlussbauteil, das als Einstellknopf zum Einstellen des Mahlgrades fungiert, ein Gewinde aufweisen, das auf ein Gegengewinde der Antriebswelle aufgeschraubt ist. Insbesondere kann vorteilhaft vorgesehen sein, dass durch Drehen des Einstellknopfes relativ zu der Antriebswelle der Relativabstand eines Mahlrotors zu einem Mahlstator veränderbar ist.

Die Kaffee- oder Gewürzmühle kann, wie bereits erwähnt, als manuell angetriebene Mühle ausgebildet sein. Insbesondere kann vorteilhaft vorgesehen sein, dass das Gehäuse dazu ausgebildet ist, während eines Mahlvorganges in einer Hand eines Benutzers gehalten zu werden, wobei der Benutzer mit seiner anderen Hand die Betätigungshandhabe, beispielsweise eine Handkurbel, betätigen kann.

Alternativ kann die Kaffee- oder Gewürzmühle als elektrisch angetriebene Mühle ausgebildet sein. Insbesondere kann vorteilhaft vorgesehen sein, dass die Antriebsvorrichtung einen elektrischen Antriebsmotor aufweist.

Besonders vorteilhat ist eine Kaffee- oder Gewürzmühle, die wenigstens einen der folgenden Aspekte aufweist:
1. Kaffee- oder Gewürzmühle mit einem Gehäuse (4), das eine Öffnung (5) aufweist, und mit einer im Bereich der Öffnung (5) angeordneten Verschlussvorrichtung (9), mittels der ein in dem Gehäuse (4) angeordnetes Aufnahmereservoir (10) für das zu mahlende Mahlgut verschließbar ist, dadurch gekennzeichnet, dass die Verschlussvorrichtung (9) zwei Verschlussbauteile (11, 12) aufweist, von denen wenigstens eines relativ zu dem Gehäuse (4) beweglich gelagert ist und die relativ zueinander wahlweise in eine Öffnungsstellung, in der Mahlgut in das Aufnahmereservoir (10) einfüllbar ist, oder eine Verschlossenstellung, in der kein Mahlgut in das Aufnahmereservoir (10) einfüllbar ist, überführbar sind.
2. Kaffee- oder Gewürzmühle nach Aspekt 1, dadurch gekennzeichnet, dass wenigstens eines der Verschlussbauteile (11, 12) wenigstens eine Durchgangsöffnung (16, 18) aufweist, die in der Verschlossenstellung von dem anderen der Verschlussbauteile (11, 12) abgedeckt ist und die in der Öffnungsstellung von dem anderen der Verschlussbauteile (11, 12) nicht abgedeckt ist.
3. Kaffee- oder Gewürzmühle nach Aspekt 2, dadurch gekennzeichnet, dass beide Verschlussbauteile (11, 12) jeweils wenigstens eine Durchgangsöffnung (16, 18) aufweisen, wobei die wenigstens eine Durchgangsöffnung (16, 18) des einen Verschlussbauteiles (11, 12) in der Öffnungsstellung mit der wenigstens einen Durchgangsöffnung (16, 18) des anderen Verschlussbauteiles (11, 12) fluchtet.
4. Kaffee- oder Gewürzmühle nach Aspekt 2 oder 3, dadurch gekennzeichnet, dass wenigstens eines der Verschlussbauteile (11, 12) mehrere Durchgangsöffnungen (16, 18), insbesondere zwei oder drei Durchgangsöffnungen (16, 18), aufweist, die in der Verschlossenstellung von dem anderen der Verschlussbauteile (11, 12) abgedeckt sind und die in der Öffnungsstellung von dem anderen der Verschlussbauteile (11, 12) nicht abgedeckt sind.
5. Kaffee- oder Gewürzmühle nach Aspekt 4, dadurch gekennzeichnet, dass beide Verschlussbauteile (11, 12) jeweils mehrere Durchgangsöffnungen (16, 18), insbesondere jeweils zwei oder drei Durchgangsöffnungen (16, 18), aufweisen, wobei die Durchgangsöffnungen (16, 18) des einen Verschlussbauteiles (11, 12) in der Öffnungsstellung mit den Durchgangsöffnungen (16, 18) des anderen Verschlussbauteiles (11, 12) fluchten.
6. Kaffee- oder Gewürzmühle nach Aspekt 5, dadurch gekennzeichnet, dass beide Verschlussbauteile (11, 12) dieselbe Anzahl von Durchgangsöffnungen (16, 18) aufweisen.
7. Kaffee- oder Gewürzmühle nach einem der Aspekte 1, 2 oder 4, dadurch gekennzeichnet, dass eines der Verschlussbauteile (11, 12) keine Durchgangsöffnungen (16, 18) aufweist, sondern so ausgebildet und angeordnet ist, dass es nicht die gesamte Fläche der Öffnung (5) ausfüllt, so dass zwischen dem Verschlussbauteil (11, 12) und dem Gehäuse (4) wenigstens ein Durchgang verbleibt, der von dem anderen Verschlussbauteil (11, 12) in der Verschlossenstellung abgedeckt wird und in der Öffnungsstellung nicht abgedeckt wird.
8. Kaffee- oder Gewürzmühle nach einem der Aspekte 2 bis 7, dadurch gekennzeichnet, dass die wenigstens eine Durchgangsöffnung (16, 18) in einem kreisscheibenförmigen oder trichterartigen Abschnitt des Verschlussbauteils (11, 12) ausgebildet ist und/oder dass beide Verschlussbauteile (11, 12) jeweils einen kreisscheibenförmigen oder trichterartigen Abschnitt aufweisen, wobei in jeder der kreisscheibenförmigen oder trichterartigen Abschnitte jeweils wenigstens eine Durchgangsöffnung (16, 18) ausgebildet ist.
9. Kaffee- oder Gewürzmühle nach Aspekt 8, dadurch gekennzeichnet, dass die wenigstens eine Durchgangsöffnung (16, 18) beabstandet zu der Mittelachse (26) des kreisscheibenförmigen oder trichterartigen Abschnitts angeordnet ist.
10. Kaffee- oder Gewürzmühle nach einem der Aspekte 1 bis 9, dadurch gekennzeichnet, dass eines der Verschlussbauteile (11, 12) relativ zu dem anderen Verschlussbauteil (11, 12)) beweglich gelagert ist.
11. Kaffee- oder Gewürzmühle nach einem der Aspekte 1 bis 10, dadurch gekennzeichnet, dass eines der Verschlussbauteile (11, 12) relativ zu dem anderen Verschlussbauteil (11, 12)) rotierbar gelagert ist.
12. Kaffee- oder Gewürzmühle nach Aspekt 11, dadurch gekennzeichnet, dass die rotierbare Lagerung mittels einer Gewindeverbindung realisiert ist.
13. Kaffee- oder Gewürzmühle nach Aspekt 11 oder 12, dadurch gekennzeichnet, dass das rotierbar gelagerte Verschlussbauteil (11, 12)) ein Gewinde aufweist, das in ein relativ zu dem anderen Verschlussbauteil (11, 12)) und/oder dem Gehäuse (4) ortfestes Gegengewinde (20) eingeschraubt ist.
14. Kaffee- oder Gewürzmühle nach einem der Aspekte 11 bis 13, dadurch gekennzeichnet, dass das rotierbar gelagerte Verschlussbauteil (11, 12)) ein Gewinde (20) aufweist, das in ein an dem Gehäuse (4) ausgebildetes Gegengewinde (20) eingeschraubt ist.
15. Kaffee- oder Gewürzmühle nach einem der Aspekte 12 bis 14, dadurch gekennzeichnet, dass ein Spannelement vorhanden ist, welches das Gewinde (20) direkt oder indirekt relativ zu dem Gegengewinde (20) verspannt.
16. Kaffee- oder Gewürzmühle nach Aspekt 15, dadurch gekennzeichnet, dass das Spannelement als Feder oder als Elastomerbauteil, insbesondere als Gummiring, beispielsweise O-Ring, ausgebildet ist.
17. Kaffee- oder Gewürzmühle nach einem der Aspekte 1 bis 16, dadurch gekennzeichnet, dass
   a. wenigstens eines der Verschlussbauteile (11, 12) als Lagerbock zur Rotationslagerung einer relativ zu dem Gehäuse (4) rotierbaren Antriebswelle (6) des Mahlwerks fungiert, und/oder dass
   b. eine Rotationslagerung eines der Verschlussbauteile (11, 12) als Rotationslagerung einer relativ zu dem Gehäuse (4) rotierbaren Antriebswelle (6) des Mahlwerks fungiert.
18. Kaffee- oder Gewürzmühle nach Aspekt 17, dadurch gekennzeichnet, dass die Rotationslagerung ein Wälzlager (13), insbesondere ein Kugellager oder ein Nadellager, oder ein Gleitlager aufweist.
19. Kaffee- oder Gewürzmühle nach Aspekt 17 oder 18, dadurch gekennzeichnet, dass wenigstens ein weiterer Lagerbock vorhanden ist, mittels dem die Antriebswelle (6) rotierbar gelagert ist.
20. Kaffee- oder Gewürzmühle nach einem der Aspekte 1 bis 19, dadurch gekennzeichnet, dass die Antriebswelle (6) durch wenigstens eines der Verschlussbauteile (11, 12) hindurch verläuft oder dass die Antriebswelle (6) durch beide Verschlussbauteile (11, 12) hindurch verläuft.
21. Kaffee- oder Gewürzmühle nach einem der Aspekte 17 bis 20 in Kombination mit Aspekt 9, dadurch gekennzeichnet, dass die Antriebswelle (6) koaxial zur Mittelachse des kreisscheibenförmigen oder trichterartigen Abschnitts angeordnet ist.
22. Kaffee- oder Gewürzmühle nach einem der Aspekte 1 bis 21, dadurch gekennzeichnet, dass eines der Verschlussbauteile (11, 12) einen trichterförmigen Abschnitt aufweist, um als Trichter zum Einfüllen von Mahlgut zu fungieren.
23. Kaffee- oder Gewürzmühle nach Aspekt 22, dadurch gekennzeichnet, dass der trichterförmige Abschnitt radial nach außen über das Gehäuse (4) hinausragt.
24. Kaffee- oder Gewürzmühle nach einem der Aspekte 1 bis 23, dadurch gekennzeichnet, dass eines der Verschlussbauteile (11, 12) relativ zu dem Gehäuse (4) unbeweglich angeordnet ist.
25. Kaffee- oder Gewürzmühle nach Aspekt 24, dadurch gekennzeichnet, dass die Kaffee- oder Gewürzmühle wenigstens eines der nachfolgenden Merkmale a bis i aufweist:
   a. das andere der Verschlussbauteile (11, 12) ist relativ zu dem Gehäuse (4) beweglich, insbesondere rotierbar, gelagert,
   b. das relativ zu dem Gehäuse (4) unbeweglich angeordnete Verschlussbauteil (11, 12)) ist, insbesondere unmittelbar, an dem Gehäuse (4) befestigt,
   c. das relativ zu dem Gehäuse (4) unbeweglich angeordnete Verschlussbauteil (11, 12)) ist, insbesondere unmittelbar, reibschlüssig, insbesondere ausschließlich reibschlüssig, an dem Gehäuse (4), insbesondere an der Innenseite einer Gehäusewandung, befestigt,
   d. das relativ zu dem Gehäuse (4) unbeweglich angeordnete Verschlussbauteil (11, 12)) weist an seinem äußeren Umfangsrand ein elastisches Element, insbesondere ein Elastomerbauteil, beispielsweise einen Elastomerring, der ein Gummiring und/oder einen O-Ring sein kann, auf, das an der Innenseite des Gehäuses (4) anliegt,
   e. das relativ zu dem Gehäuse (4) unbeweglich angeordnete Verschlussbauteil (11, 12)) weist einen kreisscheibenförmigen oder trichterartigen Abschnitt mit einer am äußeren Umfangsrand ausgebildeten Nut auf, in die ein Elastomerring, insbesondere ein Gummiring, beispielsweise ein O-Ring, eingefügt ist,
   f. das relativ zu dem Gehäuse (4) unbeweglich angeordnete Verschlussbauteil (11, 12)) ist formschlüssig an dem Gehäuse (4) befestigt,
   g. das relativ zu dem Gehäuse (4) unbeweglich angeordnete Verschlussbauteil (11, 12)) ist, insbesondere unmittelbar, stoffschlüssig an dem Gehäuse (4) befestigt,
   h. das relativ zu dem Gehäuse (4) unbeweglich angeordnete Verschlussbauteil (11, 12)) ist, insbesondere unmittelbar, ohne stoffschlüssige Verbindung an der Innenseite des Gehäuses (4) befestigt,
   i. das relativ zu dem Gehäuse (4) unbeweglich angeordnete Verschlussbauteil (11, 12)) ist so ausgebildet und angeordnet, dass es nicht die gesamte Fläche der Öffnung (5) ausfüllt, so dass zwischen dem Verschlussbauteil (11, 12)) und dem Gehäuse (4) wenigstens ein Durchgang verbleibt, der von dem anderen Verschlussbauteil (11, 12)) in der Verschlossenstellung abgedeckt wird und in der Öffnungsstellung nicht abgedeckt wird.
26. Kaffee- oder Gewürzmühle nach einem der Aspekte 1 bis 23, dadurch gekennzeichnet, dass eines der Verschlussbauteile (11, 12) relativ zu einer mit dem Mahlwerk wirkverkoppelten Antriebswelle (6) unbeweglich angeordnet ist.
27. Kaffee- oder Gewürzmühle nach Aspekt 26, dadurch gekennzeichnet, dass die Kaffee- oder Gewürzmühle wenigstens eines der nachfolgenden Merkmale a bis e aufweist:
   a. das andere der Verschlussbauteile (11, 12) ist relativ zu dem Gehäuse (4) beweglich, insbesondere rotierbar, gelagert,
   b. das relativ zu der Antriebswelle (6) unbeweglich angeordnete Verschlussbauteil (11, 12)) ist, insbesondere unmittelbar, an der Antriebswelle (6) befestigt,
   c. das relativ zu der Antriebswelle (6) unbeweglich angeordnete Verschlussbauteil (11, 12)) ist zerstörungsfrei und/oder werkzeugfrei wieder lösbar an der Antriebswelle (6) befestigt,
   d. das relativ zu der Antriebswelle (6) unbeweglich angeordnete Verschlussbauteil (11, 12)) als Trichter ausgebildet ist,
   e. das relativ zu der Antriebswelle (6) unbeweglich angeordnete Verschlussbauteil (11, 12)) mittels eines Wälzlagers relativ zu dem Gehäuse (4) rotierbar gelagert ist.
28. Kaffee- oder Gewürzmühle nach einem der Aspekte 1 bis 27, dadurch gekennzeichnet, dass eines der Verschlussbauteile (11, 12) stabförmig ausgebildet ist.
29. Kaffee- oder Gewürzmühle nach Aspekt 28, dadurch gekennzeichnet, dass die Enden des stabförmigen Verschlussbauteils (11, 12) zu den Abschnitten des Gehäuses (4), an denen sie anliegen, komplementär gegengeformt sind.
30. Kaffee- oder Gewürzmühle nach Aspekt 28 oder 29, dadurch gekennzeichnet, dass das stabförmige Verschlussbauteil (11, 12)) einen kreissegmentförmigen Querschnitt aufweist.
31. Kaffee- oder Gewürzmühle nach einem der Aspekte 1 bis 30, dadurch gekennzeichnet, dass die Kaffee- oder Gewürzmühle eine Betätigungshandhabe (7) aufweist.
32. Kaffee- oder Gewürzmühle nach Aspekt 31, dadurch gekennzeichnet, dass die Betätigungshandhabe (7) als Handkurbel oder als Stabgriff oder als Kugel oder als Trichter ausgebildet ist.
33. Kaffee- oder Gewürzmühle nach Aspekt 31 oder 32, dadurch gekennzeichnet, dass die Betätigungshandhabe (7) durch eines der Verschlussbauteile (11, 12) gebildet ist.
34. Kaffee- oder Gewürzmühle nach einem der Aspekte 31 bis 33, dadurch gekennzeichnet, dass die Verschlussvorrichtung (9) zwischen der Betätigungshandhabe (7) und dem Aufnahmereservoir (10) angeordnet ist.
35. Kaffee- oder Gewürzmühle nach einem der Aspekte 1 bis 34, dadurch gekennzeichnet, dass das Gehäuse (4) rohrförmig ausgebildet ist und die Öffnung (5) durch eine der Rohröffnungen, insbesondere eine obere Rohröffnung, gebildet ist.
36. Kaffee- oder Gewürzmühle nach einem der Aspekte 1 bis 35, dadurch gekennzeichnet, dass das Gehäuse (4) eine Ausgabeöffnung für das das gemahlene Mahlgut aufweist.
37. Kaffee- oder Gewürzmühle nach Aspekt 36, dadurch gekennzeichnet, dass die Ausgabeöffnung durch eine untere Rohröffnung gebildet ist.
38. Kaffee- oder Gewürzmühle nach einem der Aspekte 1 bis 37, dadurch gekennzeichnet, dass das Gehäuse (4) in einer Querschnittsebene senkrecht zu seiner Längserstreckungsrichtung eine kreisförmige Außenkontur und/oder eine kreisförmige Innenkontur aufweist.
39. Kaffee- oder Gewürzmühle nach einem der Aspekte 1 bis 38, dadurch gekennzeichnet, dass das Gehäuse (4) einstückig aus einem einzigen Stück Rohmaterial, insbesondere aus einem Rohr, gefertigt ist.
40. Kaffee- oder Gewürzmühle nach einem der Aspekte 1 bis 39, dadurch gekennzeichnet, dass wenigstens eines der Verschlussbauteile (11, 12) werkzeugfrei in oder an das Gehäuse (4) montierbar und/oder werkzeugfrei von dem Gehäuse (4) lösbar ist.
41. Kaffee- oder Gewürzmühle nach einem der Aspekte 1 bis 40, dadurch gekennzeichnet, dass die Kaffee- oder Gewürzmühle manuell angetrieben ist.
42. Kaffee- oder Gewürzmühle nach einem der Aspekte 1 bis 41, dadurch gekennzeichnet, dass das Gehäuse (4) dazu ausgebildet ist, während eines Mahlvorganges in einer Hand eines Benutzers gehalten zu werden, wobei der Benutzer mit seiner anderen Hand die Betätigungshandhabe (7), beispielsweise eine Handkurbel, betätigen kann.
43. Kaffee- oder Gewürzmühle nach einem der Aspekte 1 bis 42, dadurch gekennzeichnet, dass eines der Verschlussbauteile (11, 12) als Einstellknopf, insbesondere als Einstellmutter, zum Einstellen des Mahlgrades fungiert.
44. Kaffee- oder Gewürzmühle nach Aspekt 43, dadurch gekennzeichnet, dass das Verschlussbauteil (11, 12)), das als Einstellknopf zum Einstellen des Mahlgrades fungiert, ein Gewinde (20) aufweist, das auf ein Gegengewinde (20) einer Antriebswelle (6) aufgeschraubt ist.
45. Kaffee- oder Gewürzmühle nach einem der Aspekte 1 bis 44, dadurch gekennzeichnet, dass die Kaffee- oder Gewürzmühle eine Antriebsvorrichtung mit einem elektrischen Antriebsmotor aufweist.
46. Kaffee- oder Gewürzmühle, dadurch gekennzeichnet, dass die Kaffee- oder Gewürzmühle eine Betätigungshandhabe (7) zum Antreiben eines Mahlwerks aufweist, die als Trichter zum Einfüllen von Mahlgut ausgebildet ist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: eine Querschnittsdarstellung eines ersten Ausführungsbeispiels einer erfindungsgemäßen
- Fig. 2: Kaffee- oder Gewürzmühle mit einer Verschlussvorrichtung in Öffnungsstellung, eine Detailansicht auf die Verschlussvorrichtung des ersten Ausführungsbeispiels in Öffnungsstellung,
- Fig. 3: in einer Querschnittsdarstellung das erste Ausführungsbeispiel mit der Verschlussvorrichtung in Verschlossenstellung,
- Fig. 4: eine Detailansicht auf die Verschlussvorrichtung des ersten Ausführungsbeispiels in Verschlossenstellung,
- Fig. 5: eine Querschnittsdarstellung eines zweiten Ausführungsbeispiels einer erfindungsgemäßen Kaffee- oder Gewürzmühle mit einer Verschlussvorrichtung in Öffnungsstellung,
- Fig. 6: das zweite Ausführungsbeispiel einer erfindungsgemäßen Kaffee- oder Gewürzmühle mit der Verschlussvorrichtung in Verschlossenstellung,
- Fig. 7: eine Querschnittsdarstellung eines dritten Ausführungsbeispiels einer erfindungsgemäßen Kaffee- oder Gewürzmühle mit einer Verschlussvorrichtung in Verschlossenstellung,
- Fig. 8: eine Detailansicht der Verschlussvorrichtung in einer Querschnittsdarstellung,
- Fig. 9: eine Detailansicht auf die Verschlussvorrichtung des dritten Ausführungsbeispiels in Verschlossenstellung,
- Fig. 10: eine Detailansicht auf die Verschlussvorrichtung des dritten Ausführungsbeispiels in Öffnungsstellung,
- Fig. 11: eine Seitenansicht eines vierten Ausführungsbeispiels einer erfindungsgemäßen Kaffee- oder Gewürzmühle,
- Fig. 12: eine Querschnittsdarstellung eines fünften Ausführungsbeispiels einer erfindungsgemäßen Kaffee- oder Gewürzmühle mit einer Verschlussvorrichtung in Öffnungsstellung, und
- Fig. 13: in einer Querschnittsdarstellung das erste Ausführungsbeispiel mit der Verschlussvorrichtung in Verschlossenstellung.

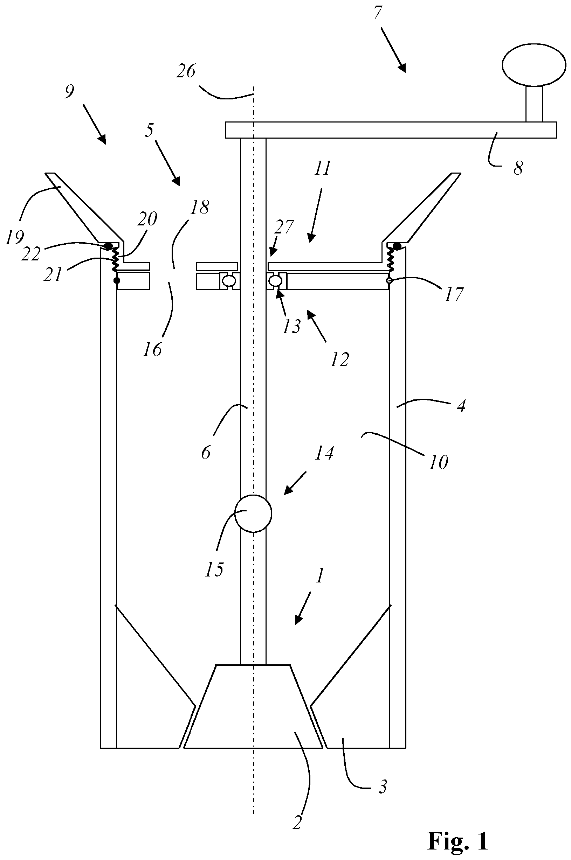

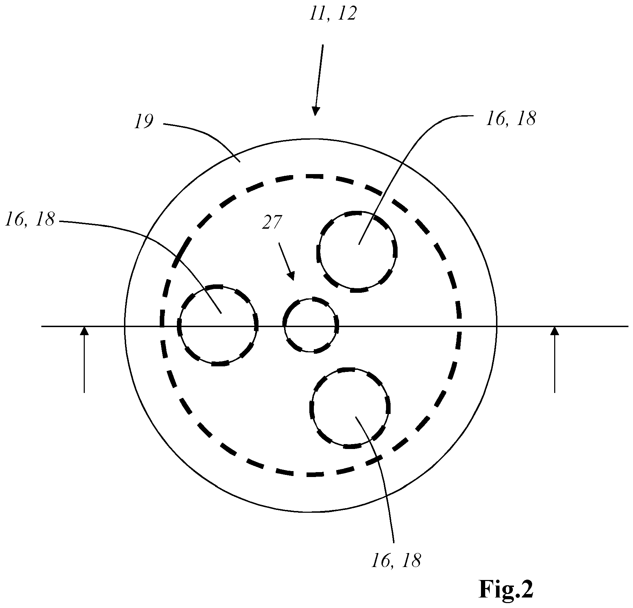

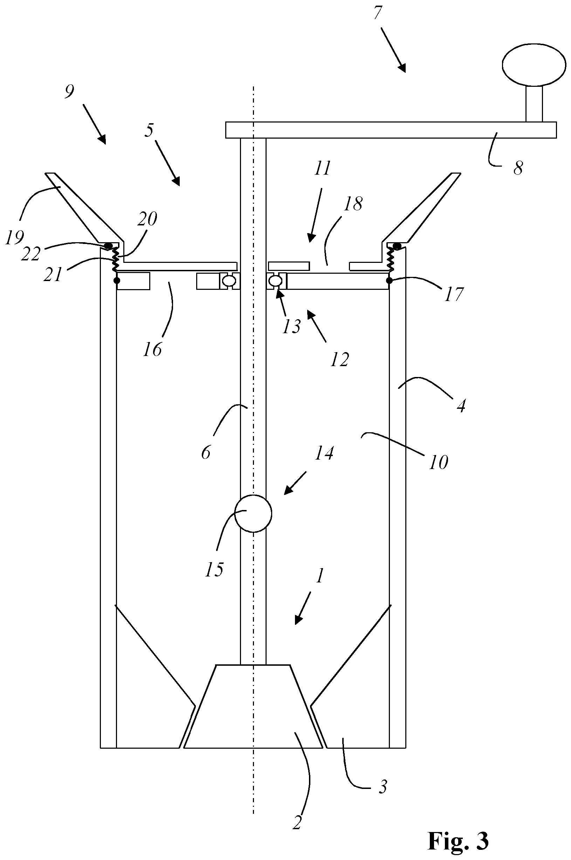

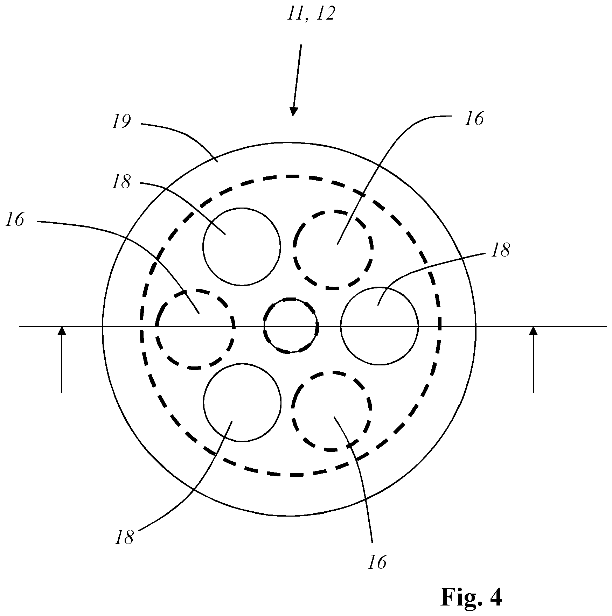

Die Figuren 1 und 3 zeigen jeweils eine Querschnittsdarstellung (entsprechend der in den Figuren 2 und 4 eingezeichneten Schnittlinie) eines ersten Ausführungsbeispiels einer erfindungsgemäßen Kaffee- oder Gewürzmühle mit einem Mahlwerk 1, das einen Mahlrotor 2, nämlich einen Mahlkegel, und einem Mahlstator 3, nämlich einen Mahlring, aufweist. Die Kaffee- oder Gewürzmühle weist außerdem ein rohrförmiges Gehäuse 4 mit einer Öffnung 5 und eine Antriebswelle 6 auf. Die Antriebswelle 6 ist einerseits drehfest mit einer Betätigungshandhabe 7, die als Handkurbel 8 ausgebildet ist, und andererseits drehfest mit dem Mahlrotor 2 des Mahlwerks 1 verbunden.

Im Bereich der Öffnung 5 ist eine Verschlussvorrichtung 9 angeordnet, mittels der ein in dem Gehäuse 4 angeordnetes Aufnahmereservoir 10, das zur Aufnahme des (nicht dargestellten) zu mahlenden Mahlgutes (im Falle der Ausbildung der Mühle als Kaffeemühle: Kaffeebohnen; im Falle der Ausbildung der Mühle als Gewürzmühle: Gewürze, wie beispielsweise Pfefferkörner) dient, verschließbar ist.

Die Verschlussvorrichtung 9 weist zwei Verschlussbauteile 11, 12 auf. Ein erstes Verschlussbauteil 11 der beiden Verschlussbauteile 11, 12 ist relativ zu dem Gehäuse 4 beweglich, nämlich rotierbar, gelagert. Ein zweites Verschlussbauteil 12 der beiden Verschlussbauteile 11, 12 ist relativ zu dem Gehäuse 4 unbeweglich angeordnet. Die Verschlussbauteile 11, 12 können relativ zueinander wahlweise in eine Öffnungsstellung (dargestellt in den Figuren 1 und 2), in der Mahlgut in das Aufnahmereservoir 10 einfüllbar ist, oder eine Verschlossenstellung (dargestellt in den Figuren 3 und 4), in der kein Mahlgut in das Aufnahmereservoir 10 einfüllbar ist, überführbar werden.

Das zweite Verschlussbauteil 12 fungiert zusätzlich zu seiner Funktion als Bestandteil der Verschlussvorrichtung 9 als Lagerbock zur Rotationslagerung der Antriebswelle 6. Hierzu weist das zweite Verschlussbauteil 12 ein Wälzlager 13 auf. Zusätzlich ist ein weiterer Lagerbock 14 vorhanden, der einen Stab 15 aufweist (die Längserstreckungsrichtung des Stabes 15 verläuft senkrecht zur Zeichenebene), in dessen Mitte ein weiteres (in den Figuren nicht sichtbares) Wälzlager zur Rotationslagerung der Antriebswelle 6 angeordnet ist.

Das zweite Verschlussbauteil 12 weist einen kreisscheibenförmigen Abschnitt auf, in dessen Mitte eine Aufnahme für das Wälzlager 13 ausgebildet ist. In dem kreisscheibenförmigen Abschnitt sind außerdem drei Durchgangsöffnungen 16 ausgebildet. Die drei Durchgangsöffnungen 16 sind von der Mittelachse 26 des zweiten Verschlussbauteil 12 beabstandet derart angeordnet, dass eine 120°-Rotationssymmetrie des kreisscheibenförmigen Abschnitts ausgebildet ist. Das zweite Verschlussbauteil 12 ist (beispielsweise reibschlüssig) an der Innenseite des Gehäuses 4 befestigt.

Hierzu weist das zweite Verschlussbauteil 12 an seinem äußeren Umfangsrand eine Nut auf, in die ein O-Ring 17 eingelegt ist. Der O-Ring 17 greift seinerseits in eine auf der Innenseite des Gehäuses 4 ausgebildete Nut ein.

Das erste Verschlussbauteil 11 weist ebenfalls einen kreisscheibenförmigen Abschnitt auf. In dem kreisscheibenförmigen Abschnitt des ersten Verschlussbauteils 11 ist in der Mitte ein Durchgang 27 für die Antriebswelle 6 ausgebildet. In dem kreisscheibenförmigen Abschnitt des ersten Verschlussbauteils 11 sind außerdem drei Durchgangsöffnungen 18 ausgebildet. Die drei Durchgangsöffnungen 18 sind von der Mittelachse 26 des ersten Verschlussbauteils 11 radial beabstandet derart angeordnet, dass eine 120°-Rotationssymmetrie des kreisscheibenförmigen Abschnitts ausgebildet ist.

Das erste Verschlussbauteil 11 weist einen trichterförmigen Abschnitt 19 auf, der als Trichter zum Einfüllen von Mahlgut zu fungiert. Der trichterförmige Abschnitt 19 umgibt den kreisscheibenförmigen Abschnitt und ragt radial nach außen über das Gehäuse 4 hinaus, was den Einfüllvorgang erleichtert. Der trichterförmige Abschnitt 19 kann gemeinsam einstückig (beispielsweise als Spritzgussteil) mit dem kreisscheibenförmigen Abschnitt ausgebildet sein, der die drei Durchgangöffnungen 18 aufweist.

Die rotierbare Lagerung des ersten Verschlussbauteils 11 ist mittels einer Gewindeverbindung (vorzugsweise Feingewinde) realisiert. Hierzu weist das erste Verschlussbauteil 11 weist ein Gewinde 20 auf, das als Außengewinde ausgebildet ist und das in ein Gegengewinde 21 ein geschraubt ist, welches als Innengewinde auf der Innenseite des Gehäuses 4 ausgebildet ist. Zwischen der ringförmigen Stirnfläche des Gehäuses 4 und dem ersten Verschlussbauteil 11 ist ein Spannelement in Form eines weiteren O-Rings 22 angeordnet, welches das Gewinde 20 relativ zu dem Gegengewinde 21 verspannt.

Die Figuren 2 und 4 zeigen jeweils eine Draufsicht von oben auf die Verschlussvorrichtung 9, wobei die Antriebswelle 6 und die Betätigungshandhabe 7 der besseren Übersichtlichkeit halber nicht eingezeichnet sind. Das ersten Verschlussbauteil 11 ist mit ausgezogenen Linien dargestellt, während das zweite Verschlussbauteil 12 mit gestrichelten Linien dargestellt ist.

In der Öffnungsstellung, die in den Figuren 1 und 2 dargestellt ist, fluchten die drei Durchgangsöffnungen 16 des ersten Verschlussbauteils 11 mit den drei Durchgangsöffnungen 18 des zweiten Verschlussbauteils 12, so dass Mahlgut eingefüllt werden kann. Durch eine Drehung des ersten Verschlussbauteils 11 relativ zu dem zweiten Verschlussbauteil 12 um 60° kann in die Verschlossenstellung umgeschaltet werden. In der Verschlossenstellung sind die Durchgangsöffnungen 16 des zweiten Verschlussbauteils 12 von dem ersten Verschlussbauteil 11 abgedeckt und es sind die Durchgangsöffnungen 18 des ersten Verschlussbauteils 11 von dem zweiten Verschlussbauteil 12 abgedeckt, so dass kein Mahlgut eingefüllt werden kann und bereits eingefülltes Mahlgut in dem Aufnahmereservoir 10 geschützt untergebracht ist.

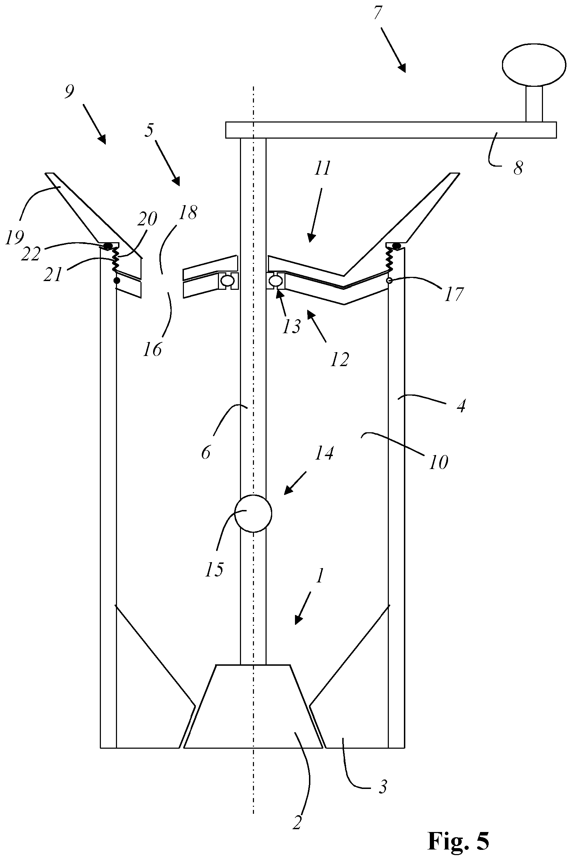

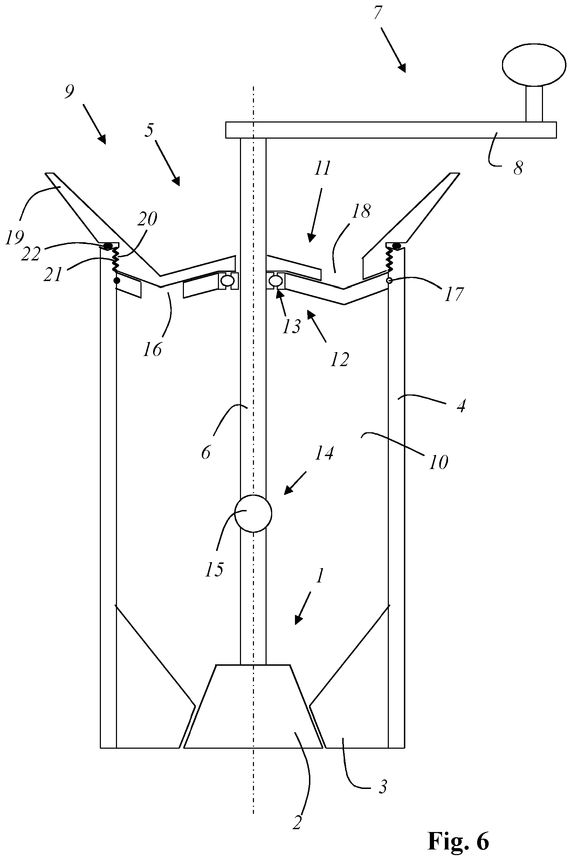

Die Figuren 5 und 6 zeigen jeweils eine Querschnittsdarstellung eines zweiten Ausführungsbeispiels einer erfindungsgemäßen Kaffee- oder Gewürzmühle. Das zweite Ausführungsbeispiel unterscheidet sich von dem ersten Ausführungsbeispiel dadurch, dass das erste Verschlussbauteil 11 und das zweite Verschlussbauteil 12 jeweils keinen scheibenförmigen Abschnitt aufweisen, in dem die Durchgangsöffnung 16, 18 ausgebildet sind, sondern jeweils einen trichterartigen Abschnitt, der als Ringtrichter mit einer ringförmigen Rille ausgebildet ist, wobei jeweils am Boden der Rille die Durchgangsöffnungen 16, 18 ausgebildet sind.

Die Figur 5 zeigt das zweite Ausführungsbeispiel mit der Verschlussvorrichtung 9 in der Öffnungsstellung, während die Figur 6 das zweite Ausführungsbeispiel mit der Verschlussvorrichtung 9 in der Verschlossenstellung zeigt.

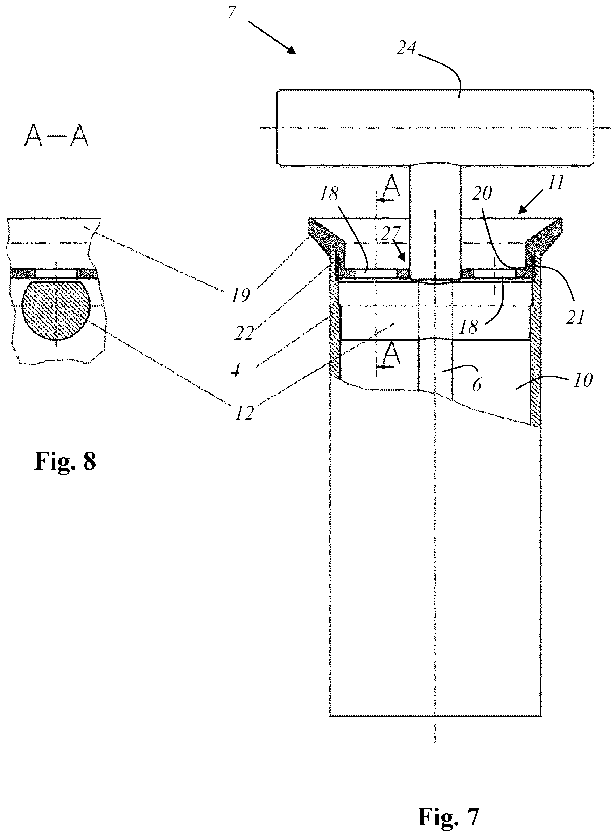

Die Figur 7 zeigt ein drittes Ausführungsbeispiel einer erfindungsgemäßen Kaffee- oder Gewürzmühle. Bei dieser Ausführung ist das zweite (relativ zu dem Gehäuse 4 unbeweglich angeordnete) Verschlussbauteil 12 stabförmig ausgebildet. Hierbei kann vorteilhaft vorgesehen sein, dass die Enden des zweiten Verschlussbauteils 12 zu den Abschnitten des Gehäuses 4, an denen sie anliegen, komplementär gegengeformt sind. Das zweite Verschlussbauteil weist einen Stab auf, der bezüglich seiner Längserstreckungsrichtung senkrecht zur Längserstreckungsrichtung des rohrförmigen Gehäuses 4 angeordnet und im Inneren des Gehäuses eingeklemmt ist. Auch bei dieser Ausführung fungiert das zweite Verschlussbauteil 12 als Lagerbock zur Rotationslagerung der Abtriebswelle 6. Hierzu kann in der Mitte des Stabes ein (in den Figuren nicht sichtbares) Wälzlager vorhanden sein. Wie man in der Figur 8 erkennen kann, weist der Stab einen kreissegmentförmigen Querschnitt auf. Dies kann beispielsweise dadurch realisiert werden, dass ein runder Stab an Rohmaterial an seiner Oberseite flach abgefräst wird. Die Abflachung ist zu dem ersten Verschlussbauteil 11 hin ausgerichtet.

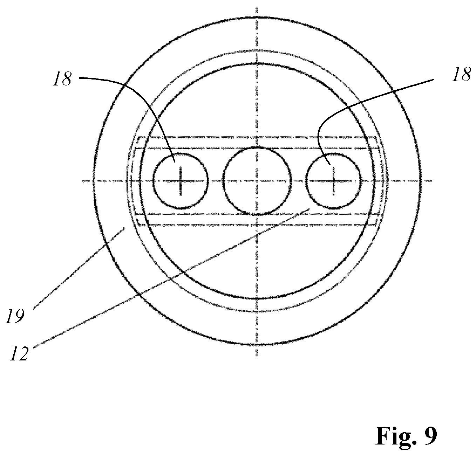

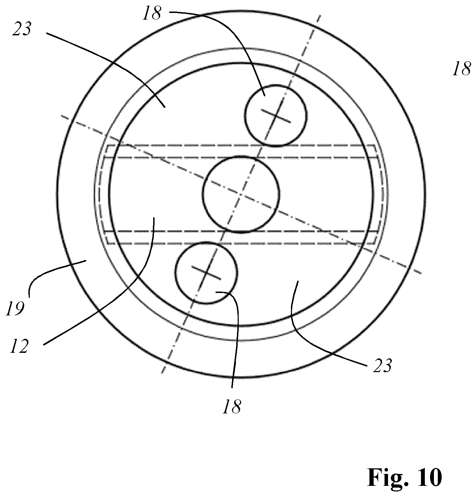

Das zweite Verschlussbauteil 12 weist bei dieser Ausführung keine Durchgangsöffnungen 16 auf, sondern ist so ausgebildet und angeordnet, dass es nicht die gesamte Fläche der Öffnung 5 ausfüllt, so dass zwischen dem zweiten Verschlussbauteil 12 und dem Gehäuse 4 beidseitig jeweils ein Durchgang 23 verbleibt, der von dem ersten Verschlussbauteil 11 in der Verschlossenstellung (siehe Figur 9) abgedeckt wird und in der Öffnungsstellung (siehe Figur 10) nicht abgedeckt wird.

Das erste Verschlussbauteil 11 weist einen kreisscheibenförmigen Abschnitt auf. In dem kreisscheibenförmigen Abschnitt des ersten Verschlussbauteils 11 ist in der Mitte ein Durchgang 27 für die Antriebswelle 6 ausgebildet. In dem kreisscheibenförmigen Abschnitt des ersten Verschlussbauteils 11 sind außerdem zwei Durchgangsöffnungen 18 ausgebildet. Die zwei Durchgangsöffnungen 18 sind von der Mittelachse des ersten Verschlussbauteils 11 beabstandet derart angeordnet, dass eine 180°-Rotationssymmetrie des kreisscheibenförmigen Abschnitts ausgebildet ist.

Das erste Verschlussbauteil 11 weist einen trichterförmigen Abschnitt 19 auf, der als Trichter zum Einfüllen von Mahlgut zu fungiert. Der trichterförmige Abschnitt 19 umgibt den kreisscheibenförmigen Abschnitt und ragt radial nach außen über das Gehäuse 4 hinaus, was den Einfüllvorgang erleichtert. Der trichterförmige Abschnitt 19 kann gemeinsam einstückig (beispielsweise als Spritzgussteil) mit dem kreisscheibenförmigen Abschnitt ausgebildet sein, der die zwei Durchgangöffnungen 18 aufweist.

Die rotierbare Lagerung des ersten Verschlussbauteils 11 ist mittels einer Gewindeverbindung (vorzugsweise Feingewinde) realisiert. Hierzu weist das erste Verschlussbauteil 11 ein Gewinde 20 auf, das als Außengewinde ausgebildet ist und das in ein Gegengewinde 21 eingeschraubt ist, welches als Innengewinde auf der Innenseite des Gehäuses 4 ausgebildet ist. Zwischen dem Gewinde 20 und dem Gegengewinde 21 ist jeweils in einer umlaufenden Nut des Gewinnes 20 und des Gegengewindes 21 ein Spannelement in Form eines O-Rings 22 angeordnet, welches das Gewinde 20 relativ zu dem Gegengewinde 21 verspannt.

In der Öffnungsstellung, die in der Figur 10 dargestellt ist, fluchten die zwei Durchgangsöffnungen 18 mit den Durchgängen 23, so dass Mahlgut eingefüllt werden kann. Durch eine ausreichende Drehung des ersten Verschlussbauteils 11 relativ zu dem zweiten Verschlussbauteil 12 kann in die Verschlossenstellung umgeschaltet werden. In der Verschlossenstellung sind die Durchgangsöffnungen 18 des ersten Verschlussbauteils 11 von dem zweiten Verschlussbauteil 12 abgedeckt (dargestellt in den Figuren 7 und 9), so dass kein Mahlgut eingefüllt werden kann und bereits eingefülltes Mahlgut in dem Aufnahmereservoir 10 geschützt untergebracht ist.

Bei dem dritten Ausführungsbeispiel ist die Betätigungshandhabe 7 als Stabgriff 24 ausgebildet, die in der Mitte drehfest mit der Abtriebswelle 6 (vorzugsweise Zerstörung und/oder werkzeugfrei wieder lösbar) verbunden ist.

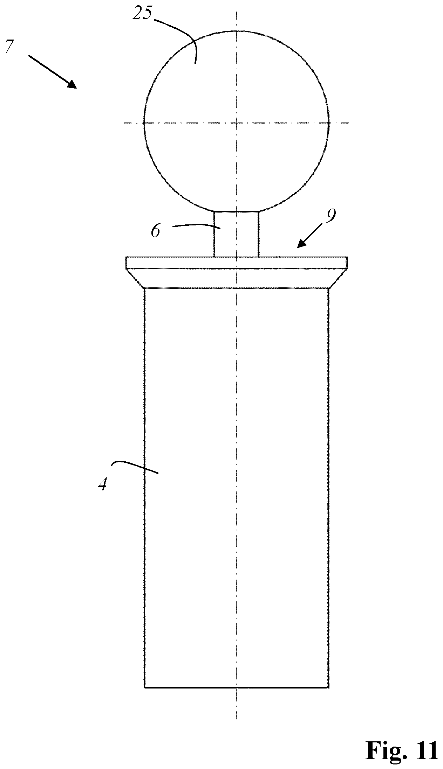

Die Figur 11 zeigt ein viertes Ausführungsbeispiel, welches sich von dem dritten Ausführungsbeispiel durch die Ausführung der Betätigungshandhabe 7 unterscheidet. Bei dem vierten Ausführungsbeispiel ist die Betätigungshandhabe 7 als Kugel 25 ausgebildet.

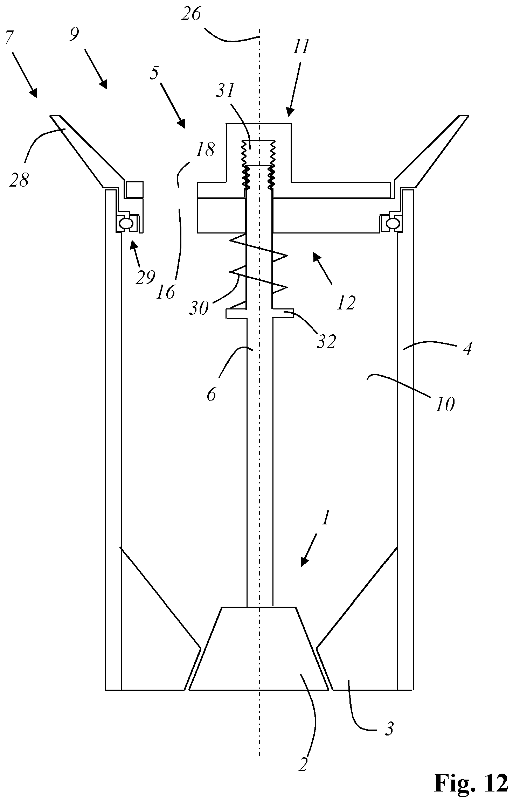

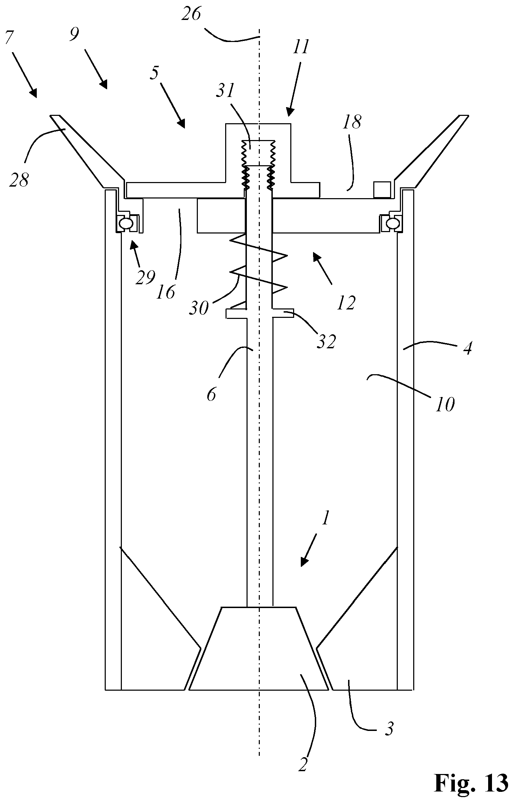

Die Figuren 12 und 13 zeigen jeweils eine Querschnittsdarstellung eines fünften Ausführungsbeispiels einer erfindungsgemäßen Kaffee- oder Gewürzmühle mit einer Verschlussvorrichtung 9 und mit einem Mahlwerk 1, das einen Mahlrotor 2, nämlich einen Mahlkegel, und einem Mahlstator 3, nämlich einen Mahlring, aufweist. Die Kaffee- oder Gewürzmühle weist außerdem ein rohrförmiges Gehäuse 4 mit einer Öffnung 5 und eine Antriebswelle 6 auf. Die Antriebswelle 6 ist einerseits drehfest (jedoch für einen Reinigungsvorgang zerstörungsfrei vorübergehend lösbar) mit einer Betätigungshandhabe 7, die als Trichter 28 und als Bestandteil der Verschlussvorrichtung 9 ausgebildet ist, und andererseits drehfest mit dem Mahlrotor 2 des Mahlwerks 1 verbunden.

Die Verschlussvorrichtung 9 ist Bereich der Öffnung 5 angeordnet. Mittels der Verschlussvorrichtung ist ein in dem Gehäuse 4 angeordnetes Aufnahmereservoir 10, das zur Aufnahme des (nicht dargestellten) zu mahlenden Mahlgutes (im Falle der Ausbildung der Mühle als Kaffeemühle: Kaffeebohnen; im Falle der Ausbildung der Mühle als Gewürzmühle: Gewürze, wie beispielsweise Pfefferkörner) dient, verschließbar.

Die Verschlussvorrichtung 9 weist zwei Verschlussbauteile 11, 12 auf. Die Verschlussbauteile 11, 12 können relativ zueinander wahlweise in eine Öffnungsstellung (dargestellt in Figur 12), in der Mahlgut in das Aufnahmereservoir 10 einfüllbar ist, oder eine Verschlossenstellung (dargestellt in Figur 13), in der kein Mahlgut in das Aufnahmereservoir 10 einfüllbar ist, überführbar werden.

Das erste Verschlussbauteil 11 weist einen kreisscheibenförmigen Abschnitt auf. In dem kreisscheibenförmigen Abschnitt des ersten Verschlussbauteils 11 ist in der Mitte ein Gewindesackloch 31 zum Aufschrauben des ersten Verschlussbauteils 11 auf ein Gewinde am Ende der Antriebswelle 6 ausgebildet. In dem kreisscheibenförmigen Abschnitt des ersten Verschlussbauteils 11 sind außerdem drei Durchgangsöffnungen 18 ausgebildet. Die drei Durchgangsöffnungen 18 sind von der Mittelachse 26 des ersten Verschlussbauteils 11 radial beabstandet derart angeordnet, dass eine 120°-Rotationssymmetrie des kreisscheibenförmigen Abschnitts ausgebildet ist.

Das erste Verschlussbauteil 11 fungiert außerdem als Einstellknopf, zum Einstellen des Mahlgrades, da durch Drehen des ersten Verschlussbauteils 11 relativ zu der Antriebswelle der Relativabstand des Mahlrotors 2 zu dem Mahlstator 3 veränderbar ist. Der Relativabstand des Mahlrotors 2 zu dem Mahlstator 3 ist verringerbar, indem das erste Verschlussbauteil 11 (gegen die Rückstellkraft einer Feder 30, die sich einerseits an dem zweiten Verschlussbauteil 12 und andererseits an einem Wellenbund 32 der Antriebswelle 6 abstützt) weiter auf die Antriebswelle 6 aufgeschraubt wird.

Das zweite Verschlussbauteil 12 weist ebenfalls einen kreisscheibenförmigen Abschnitt auf, in dessen Mitte ein Durchgang zur drehfesten Ankopplung an die Antriebswelle 6 ausgebildet ist. Beispielsweise können die Antriebswelle 6 und der Durchgang jeweils einen von der Kreisform abweichenden Querschnitt aufweisen, um eine formschlüssige, drehfeste Ankopplung zu realisieren. Alternativ oder zusätzlich kann eine drehfeste Ankopplung auch mittels einer radial verlaufenden Stiftschraube realisiert sein.

In dem kreisscheibenförmigen Abschnitt sind außerdem drei Durchgangsöffnungen 16 ausgebildet. Die drei Durchgangsöffnungen 16 sind von der Mittelachse 26 des zweiten Verschlussbauteil 12 beabstandet derart angeordnet, dass eine 120°-Rotationssymmetrie des kreisscheibenförmigen Abschnitts ausgebildet ist.

Das zweite Verschlussbauteil 12 ist mittels eines Wälzlagers 29 unmittelbar an dem Gehäuse 4 rotierbar gelagert. Die Antriebswelle 6 ist mittelbar insoweit mittelbar über das zweite Verschlussbauteil 12 relativ zu dem Gehäuse 4 rotierbar gelagert. Das zweite Verschlussbauteil 12 bei diesem Ausführungsbeispiel auch als Betätigungshandhabe 7, die von dem Benutzer zum Betreiben der Kaffee- oder Gewürzmühle relativ zu dem Gehäuse 4 rotiert wird.

In der Öffnungsstellung fluchten die drei Durchgangsöffnungen 16 des ersten Verschlussbauteils 11 mit den drei Durchgangsöffnungen 18 des zweiten Verschlussbauteils 12, so dass Mahlgut eingefüllt werden kann. Durch eine Drehung des ersten Verschlussbauteils 11 um 60° relativ zu dem zweiten Verschlussbauteil 12 kann in die Verschlossenstellung umgeschaltet werden. In der Verschlossenstellung sind die Durchgangsöffnungen 16 des zweiten Verschlussbauteils 12 von dem ersten Verschlussbauteil 11 abgedeckt und es sind die Durchgangsöffnungen 18 des ersten Verschlussbauteils 11 von dem zweiten Verschlussbauteil 12 abgedeckt, so dass kein Mahlgut eingefüllt werden kann und bereits eingefülltes Mahlgut in dem Aufnahmereservoir 10 geschützt untergebracht ist. Es ist nicht von Relevanz, dass bei einem Umschalten von der Verschlossenstellung in die Öffnungsstellung automatisch auch der Mahlgrad (geringfügig) verändert wird, weil das erste Verschlussbauteil 11 nach dem Einfüllen relativ zu dem zweiten Verschlussbauteil 12 wieder zurück in die Verschlossenstellung gedreht wird, wodurch automatisch der ursprüngliche Mahlgrad eingestellt wird.

### Bezugszeichenliste:

- 1: Mahlberg
- 2: Mahlrotor
- 3: Mahlstator
- 4: Gehäuse
- 5: Öffnung
- 6: Antriebswelle
- 7: Betätigungshandhabe
- 8: Handkurbel
- 9: Verschlussvorrichtung
- 10: Aufnahmereservoir
- 11: Erstes Verschlussbauteil
- 12: Zweites Verschlussbauteil
- 13: Wälzlager
- 14: weiterer Lagerbock
- 15: Stab
- 16: Durchgangsöffnung
- 17: O-Ring
- 18: Durchgangsöffnung
- 19: trichterförmiger Abschnitt
- 20: Gewinde
- 21: Gegengewinde
- 22: O-Ring
- 23: Durchgang
- 24: Stabgriff
- 25: Kugel
- 26: Mittelachse
- 27: Durchgang
- 28: Trichter
- 29: Wälzlager
- 30: Feder
- 31: Gewindesackloch
- 32: Wellenbund

## Patentansprüche

1. Kaffee- oder Gewürzmühle mit einem Gehäuse (4), das eine Öffnung (5) aufweist, und mit einer im Bereich der Öffnung (5) angeordneten Verschlussvorrichtung (9), mittels der ein in dem Gehäuse (4) angeordnetes Aufnahmereservoir (10) für das zu mahlende Mahlgut verschließbar ist, **dadurch gekennzeichnet, dass** die Verschlussvorrichtung (9) zwei Verschlussbauteile (11, 12) aufweist, von denen wenigstens eines relativ zu dem Gehäuse (4) beweglich gelagert ist und die relativ zueinander wahlweise in eine Öffnungsstellung, in der Mahlgut in das Aufnahmereservoir (10) einfüllbar ist, oder eine Verschlossenstellung, in der kein Mahlgut in das Aufnahmereservoir (10) einfüllbar ist, überführbar sind.

2. Kaffee- oder Gewürzmühle nach Anspruch 1, **dadurch gekennzeichnet, dass** die Kaffee- oder Gewürzmühle wenigstens eines der folgenden Merkmale a bis i aufweist:
a. wenigstens eines der Verschlussbauteile (11, 12) weist wenigstens eine Durchgangsöffnung (16, 18) auf, die in der Verschlossenstellung von dem anderen der Verschlussbauteile (11, 12) abgedeckt ist und die in der Öffnungsstellung von dem anderen der Verschlussbauteile (11, 12) nicht abgedeckt ist,
b. beide Verschlussbauteile (11, 12) weisen jeweils wenigstens eine Durchgangsöffnung (16, 18) auf, wobei die wenigstens eine Durchgangsöffnung (16, 18) des einen Verschlussbauteiles (11, 12) in der Öffnungsstellung mit der wenigstens einen Durchgangsöffnung (16, 18) des anderen Verschlussbauteiles (11, 12) fluchtet,
c. wenigstens eines der Verschlussbauteile (11, 12) weist mehrere Durchgangsöffnungen (16, 18), insbesondere zwei oder drei Durchgangsöffnungen (16, 18), auf, die in der Verschlossenstellung von dem anderen der Verschlussbauteile (11, 12) abgedeckt sind und die in der Öffnungsstellung von dem anderen der Verschlussbauteile (11, 12) nicht abgedeckt sind,
d. beide Verschlussbauteile (11, 12) weisen jeweils mehrere Durchgangsöffnungen (16, 18), insbesondere jeweils zwei oder drei Durchgangsöffnungen (16, 18), auf, wobei die Durchgangsöffnungen (16, 18) des einen Verschlussbauteiles (11, 12) in der Öffnungsstellung mit den Durchgangsöffnungen (16, 18) des anderen Verschlussbauteiles (11, 12) fluchten,
e. Kaffee beide Verschlussbauteile (11, 12) weisen dieselbe Anzahl von Durchgangsöffnungen (16, 18) auf
f. eines der Verschlussbauteile (11, 12) weist keine Durchgangsöffnungen (16, 18) auf, sondern so ausgebildet und angeordnet ist, dass es nicht die gesamte Fläche der Öffnung (5) ausfüllt, so dass zwischen dem Verschlussbauteil (11, 12) und dem Gehäuse (4) wenigstens ein Durchgang verbleibt, der von dem anderen Verschlussbauteil (11, 12) in der Verschlossenstellung abgedeckt wird und in der Öffnungsstellung nicht abgedeckt wird,
g. wenigstens eines der Verschlussbauteile (11, 12) weist wenigstens eine Durchgangsöffnung (16, 18) auf, die in einem kreisscheibenförmigen oder trichterartigen Abschnitt des Verschlussbauteils (11, 12) ausgebildet ist,
h. beide Verschlussbauteile (11, 12) jeweils einen kreisscheibenförmigen oder trichterartigen Abschnitt aufweisen, wobei in jeder der kreisscheibenförmigen oder trichterartigen Abschnitte jeweils wenigstens eine Durchgangsöffnung (16, 18) ausgebildet ist,
i. wenigstens eines der Verschlussbauteile (11, 12) weist wenigstens eine Durchgangsöffnung (16, 18) auf, die beabstandet zu der Mittelachse (26) des kreisscheibenförmigen oder trichterartigen Abschnitts angeordnet ist.

3. Kaffee- oder Gewürzmühle nach Anspruch 1 oder 2, **dadurch gekennzeichnet, dass** eines der Verschlussbauteile (11, 12) relativ zu dem anderen Verschlussbauteil (11, 12)) rotierbar gelagert ist.

4. Kaffee- oder Gewürzmühle nach Anspruch 3, **dadurch gekennzeichnet, dass** die Kaffee- oder Gewürzmühle wenigstens eines der folgenden Merkmale a bis d aufweist:
a. die rotierbare Lagerung ist mittels einer Gewindeverbindung realisiert,
b. das rotierbar gelagerte Verschlussbauteil (11, 12)) weist ein Gewinde auf, das in ein relativ zu dem anderen Verschlussbauteil (11, 12)) und/oder dem Gehäuse (4) ortfestes Gegengewinde (20) eingeschraubt ist,
c. das rotierbar gelagerte Verschlussbauteil (11, 12)) weist ein Gewinde (20) auf, das in ein an dem Gehäuse (4) ausgebildetes Gegengewinde (20) eingeschraubt ist,
d. es ist ein Spannelement, insbesondere ein als Feder oder als Elastomerbauteil, insbesondere als Gummiring, beispielsweise O-Ring, ausgebildetes Spannelement, vorhanden, welches das Gewinde (20) direkt oder indirekt relativ zu dem Gegengewinde (20) verspannt,

5. Kaffee- oder Gewürzmühle nach einem der Ansprüche 1 bis 4, **dadurch gekennzeichnet, dass** die Kaffee- oder Gewürzmühle wenigstens eines der folgenden Merkmale a bis d aufweist:
a. wenigstens eines der Verschlussbauteile (11, 12) fungiert als Lagerbock zur Rotationslagerung einer relativ zu dem Gehäuse (4) rotierbaren Antriebswelle (6) des Mahlwerks,
b. eine Rotationslagerung eines der Verschlussbauteile (11, 12) fungiert als Rotationslagerung einer relativ zu dem Gehäuse (4) rotierbaren Antriebswelle (6) des Mahlwerks,
c. die Rotationslagerung weist ein Wälzlager (13), insbesondere ein Kugellager oder ein Nadellager, oder ein Gleitlager auf,
d. es ist wenigstens ein weiterer Lagerbock vorhanden, mittels dem die Antriebswelle (6) rotierbar gelagert ist.

6. Kaffee- oder Gewürzmühle nach einem der Ansprüche 1 bis 5, **dadurch gekennzeichnet, dass** die Antriebswelle (6) durch wenigstens eines der Verschlussbauteile (11, 12) hindurch verläuft oder dass die Antriebswelle (6) durch beide Verschlussbauteile (11, 12) hindurch verläuft.

7. Kaffee- oder Gewürzmühle nach einem der Ansprüche 1 bis 6, **dadurch gekennzeichnet, dass** eines der Verschlussbauteile (11, 12) einen trichterförmigen Abschnitt aufweist, um als Trichter zum Einfüllen von Mahlgut zu fungieren, insbesondere einen trichterförmigen Abschnitt, der radial nach außen über das Gehäuse (4) hinausragt.

8. Kaffee- oder Gewürzmühle nach einem der Ansprüche 1 bis 7, **dadurch gekennzeichnet, dass** eines der Verschlussbauteile (11, 12) relativ zu dem Gehäuse (4) unbeweglich angeordnet ist.

9. Kaffee- oder Gewürzmühle nach Anspruch 8, **dadurch gekennzeichnet, dass** die Kaffee- oder Gewürzmühle wenigstens eines der nachfolgenden Merkmale a bis i aufweist:
a. das andere der Verschlussbauteile (11, 12) ist relativ zu dem Gehäuse (4) beweglich, insbesondere rotierbar, gelagert,
b. das relativ zu dem Gehäuse (4) unbeweglich angeordnete Verschlussbauteil (11, 12)) ist, insbesondere unmittelbar, an dem Gehäuse (4) befestigt,
c. das relativ zu dem Gehäuse (4) unbeweglich angeordnete Verschlussbauteil (11, 12)) ist, insbesondere unmittelbar, reibschlüssig, insbesondere ausschließlich reibschlüssig, an dem Gehäuse (4), insbesondere an der Innenseite einer Gehäusewandung, befestigt,
d. das relativ zu dem Gehäuse (4) unbeweglich angeordnete Verschlussbauteil (11, 12)) weist an seinem äußeren Umfangsrand ein elastisches Element, insbesondere ein Elastomerbauteil, beispielsweise einen Elastomerring, der ein Gummiring und/oder einen O-Ring sein kann, auf, das an der Innenseite des Gehäuses (4) anliegt,
e. das relativ zu dem Gehäuse (4) unbeweglich angeordnete Verschlussbauteil (11, 12)) weist einen kreisscheibenförmigen oder trichterartigen Abschnitt mit einer am äußeren Umfangsrand ausgebildeten Nut auf, in die ein Elastomerring, insbesondere ein Gummiring, beispielsweise ein O-Ring, eingefügt ist,
f. das relativ zu dem Gehäuse (4) unbeweglich angeordnete Verschlussbauteil (11, 12)) ist formschlüssig an dem Gehäuse (4) befestigt,
g. das relativ zu dem Gehäuse (4) unbeweglich angeordnete Verschlussbauteil (11, 12)) ist, insbesondere unmittelbar, stoffschlüssig an dem Gehäuse (4) befestigt,
h. das relativ zu dem Gehäuse (4) unbeweglich angeordnete Verschlussbauteil (11, 12)) ist, insbesondere unmittelbar, ohne stoffschlüssige Verbindung an der Innenseite des Gehäuses (4) befestigt,
i. das relativ zu dem Gehäuse (4) unbeweglich angeordnete Verschlussbauteil (11, 12)) ist so ausgebildet und angeordnet, dass es nicht die gesamte Fläche der Öffnung (5) ausfüllt, so dass zwischen dem Verschlussbauteil (11, 12)) und dem Gehäuse (4) wenigstens ein Durchgang verbleibt, der von dem anderen Verschlussbauteil (11, 12)) in der Verschlossenstellung abgedeckt wird und in der Öffnungsstellung nicht abgedeckt wird.

10. Kaffee- oder Gewürzmühle nach einem der Ansprüche 1 bis 9, **dadurch gekennzeichnet, dass** eines der Verschlussbauteile (11, 12) relativ zu einer mit dem Mahlwerk wirkverkoppelten Antriebswelle (6) unbeweglich angeordnet ist.

11. Kaffee- oder Gewürzmühle nach Anspruch 10, **dadurch gekennzeichnet, dass** die Kaffee- oder Gewürzmühle wenigstens eines der nachfolgenden Merkmale a bis e aufweist:
a. das andere der Verschlussbauteile (11, 12) ist relativ zu dem Gehäuse (4) beweglich, insbesondere rotierbar, gelagert,
b. das relativ zu der Antriebswelle (6) unbeweglich angeordnete Verschlussbauteil (11, 12)) ist, insbesondere unmittelbar, an der Antriebswelle (6) befestigt,
c. das relativ zu der Antriebswelle (6) unbeweglich angeordnete Verschlussbauteil (11, 12)) ist zerstörungsfrei und/oder werkzeugfrei wieder lösbar an der Antriebswelle (6) befestigt,
d. das relativ zu der Antriebswelle (6) unbeweglich angeordnete Verschlussbauteil (11, 12)) als Trichter ausgebildet ist,
e. das relativ zu der Antriebswelle (6) unbeweglich angeordnete Verschlussbauteil (11, 12)) mittels eines Wälzlagers relativ zu dem Gehäuse (4) rotierbar gelagert ist.

12. Kaffee- oder Gewürzmühle nach einem der Ansprüche 1 bis 11, **dadurch gekennzeichnet, dass** die Kaffee- oder Gewürzmühle wenigstens eines der nachfolgenden Merkmale a bis c aufweist:
a. eines der Verschlussbauteile (11, 12) ist stabförmig ausgebildet,
b. eines der Verschlussbauteile (11, 12) ist stabförmig ausgebildet, wobei die Enden des stabförmigen Verschlussbauteils (11, 12) zu den Abschnitten des Gehäuses (4), an denen sie anliegen, komplementär gegengeformt sind,
c. eines der Verschlussbauteile (11, 12) ist stabförmig ausgebildet und weist einen kreissegmentförmigen Querschnitt auf.

13. Kaffee- oder Gewürzmühle nach einem der Ansprüche 1 bis 12, **dadurch gekennzeichnet, dass** die Kaffee- oder Gewürzmühle wenigstens eines der nachfolgenden Merkmale a bis e aufweist:
a. die Kaffee- oder Gewürzmühle weist eine Betätigungshandhabe (7) auf,
b. die Kaffee- oder Gewürzmühle weist eine Betätigungshandhabe (7) auf, die als Handkurbel oder als Stabgriff oder als Kugel oder als Trichter ausgebildet ist,
c. die Kaffee- oder Gewürzmühle weist eine Betätigungshandhabe (7) auf, die durch eines der Verschlussbauteile (11, 12) gebildet ist,
d. die Verschlussvorrichtung (9) ist zwischen der Betätigungshandhabe (7) und dem Aufnahmereservoir (10) angeordnet,
e. die Kaffee- oder Gewürzmühle weist eine Betätigungshandhabe (7) zum Antreiben eines Mahlwerks auf, die als Trichter zum Einfüllen von Mahlgut ausgebildet ist.

14. Kaffee- oder Gewürzmühle nach einem der Ansprüche 1 bis 13, **dadurch gekennzeichnet, dass** eines der Verschlussbauteile (11, 12), insbesondere ein Verschlussbauteil, das relativ zu einer Antriebswelle rotierbar ist, als Einstellknopf, insbesondere als Einstellmutter, zum Einstellen des Mahlgrades fungiert.

15. Kaffee- oder Gewürzmühle nach Anspruch 14, **dadurch gekennzeichnet, dass** das Verschlussbauteil (11, 12)), das als Einstellknopf zum Einstellen des Mahlgrades fungiert, ein Gewinde (20) aufweist, das auf ein Gegengewinde (20) einer Antriebswelle (6) aufgeschraubt ist.
